# EUROPEAN PATENT SPECIFICATION

(11) **EP 3 041 069 B1**
(45) Date of publication and mention of the grant of the patent: **14.03.2018**
(21) Application number: 15202563.1
(22) Date of filing: 23.12.2015
(51) Int. Cl.: H01M 4/131, H01M 4/1391, H01M 4/505, H01M 4/525, H01M 4/58, H01M 4/62, H01M 10/052

(54) **BATTERY ELECTRODE PASTE COMPOSITION**
BATTERIEELEKTRODENPASTENZUSAMMENSETZUNG
COMPOSITION DE PÂTE POUR ÉLECTRODE DE BATTERIE

(30) Priority: 31.12.2014 TW 103146517; 22.12.2015 TW 104143101
(43) Date of publication of application: 06.07.2016
(73) Proprietor: Industrial Technology Research Institute, 31040 Hsinchu (TW)
(72) Inventor: PAN, Jing-Pin, 31040 Hsinchu (TW); WU, Hung-Chun, 31040 Hsinchu (TW); FANG, Jason, 31040 Hsinchu (TW); LEE, Jen-Jeh, 31040 Hsinchu (TW); WANG, Tsung-Hsiung, 31040 Hsinchu (TW); CHEN, Chen-Chung, 31040 Hsinchu (TW); YEH, Ting-Ju, 31040 Hsinchu (TW); LI, Yu-Han, 31040 Hsinchu (TW); LAI, Guan-Lin, 31040 Hsinchu (TW); LO, Jen-Chih, 31040 Hsinchu (TW); HSU, Jung-Mu, 31040 Hsinchu (TW); YANG, Chang-Rung, 31040 Hsinchu (TW)
(74) Representative: Epping - Hermann - Fischer

(56) References cited:
- CN-A- 103 311 552
- US-A1- 2014 175 337
- US-A1- 2015 086 849

## Description

### TECHNICAL FIELD

The present disclosure relates to a battery electrode paste composition, and more specifically, to a battery electrode paste composition for a lithium battery.

### BACKGROUND

In recent years, there is a trend for 3C electronic products, such as notebook computers, foldable mobile phones, digital cameras and video cameras, to be lighter, thinner, shorter, and smaller, in the fields of electronic technology as well as the communication products, and a need for a portable energy supplier, i.e., a "secondary battery", is thus increases. Also, the secondary batteries satisfying the need and the specification are developed to be thinner, smaller and lighter. Meanwhile, due to needs for various functions, high-speed, high performance and high power for electronic products, the capacitance for the secondary battery is increasingly in demand as well.

In general, the energy density of a lithium-ion battery is about 260 k Wh/m³ to 270 k Wh/m³, which is about twice the energy density of a nickel-cadmium alkaline secondary battery or even more. A lithium-ion/lithium polymer secondary battery has the advantages like fast charge, high power discharge, high energy density and long cycle life, etc. Hence, among all of the secondary batteries, the lithium ion battery and the lithium polymer battery are important for application to small electronic products.

Electrochemical principles of the lithium ion battery or the lithium-polymer battery are the same as those of conventional batteries. Main
components of each of the batteries include an anode, a cathode, an isolating membrane and an electrolyte. During charging, lithium ions migrate from the anode toward the cathode; and during discharging, the lithium ions migrate from the cathode toward the anode. Both the anode and cathode include an electron collecting plate and an electrode surface coating, wherein both of the anode and cathode electrode surface coatings contain an electrode activator, conductive powders and an electrode adhesive.

US Patent Publication No. 2014/0175337A1 discloses a modified maleimide oligomer. The modified maleimide oligomer is made by performing a reaction of a compound having a barbituric acid structure, a free radical capture, and a compound having a maleimide structure. A composition including the modified maleimide oligomer for a battery is also disclosed.

CN Patent Publication No. 103311552A discloses a method for improving the adhesive force of a lithium ion battery negative electrode material lithium titanate. US Patent Publication No. 2015/0086849A1 discloses a preparation method of an oligomer-polymer, wherein a maleimide is reacted with a barbituric acid to form a first oligomer-polymer, and the first oligomer-polymer is then reacted with a phenylsiloxane oligomer to form a second oligomer-polymer.

In the production of an anode paste composition for the anode electrode surface coating, metal oxide powder including an anode active substance, such as high-density lithium cobalt oxide (LiCoO₂), low-density carbon powder and graphite, would easily cause sedimentation during the mixing and dispersion of the electrode adhesive, polyvinylidene difluoride (PVDF), and a solvent, N-methylpyrrolidone (NMP). Hence, the compatibility of maleimide modified
with a barbituric acid and the battery electrode paste solvent improved by the acid is developed. However, the unreacted maleimide and barbituric acid may ionize and combine with the electrode adhesive. Such combination may destroy original pliable stiffness of the electrode additive, causing cracks of the anode when high-density rolling it for forming a battery core, and thereby resulting in a low production yield, loss of the electrolyte, and reduction in capacitance.

Accordingly, there is a need for a novel battery electrode paste composition to be applied in lithium ion batteries or lithium-polymer batteries, which are battery products with prolong cycle life.

### SUMMARY

A battery electrode paste composition is provided, which includes a silane coupling agent-modified active substance, a conductive additive, an adhesive additive and a maleimide additive.

The silane coupling agent-modified active substance contains lithium and at least one non-lithium metal.

The maleimide additive contains a compound having a maleimide structure.

### DETAILED DESCRIPTION OF THE INVENTION

Below, the exemplary embodiments will be described in detail, so that a person having ordinary knowledge in the art may easily understand the advantages and the effect of the present disclosure based on the present disclosure.

The battery electrode paste composition of the present application contains an active substance, a conductive additive, an adhesive and a melaimide additive.

The silane coupling agent-modified active substance contains lithium and at least one non-lithium metal. In addition, the silane coupling agent-modified active substance is obtained by binding the silane coupling agent to the active substance.

For example, the silane coupling agent-modified active substance is obtained by a reaction of the silane coupling agent and the active material in a solvent such as n-hexane. In one specific embodiment of the reaction, the silane coupling agent-modified active substance, the weight ratio of the silane coupling agent and the active substance is from 1:10000 to 15:10000, the weight ratio of the active substance and the n-hexane is from 20:1 to 3:1, and the reaction temperature is from 130°C to 190°C.

The silane coupling agent is preferably the silane coupling agent having an reactive group -NH₂ or -CH=CH₂, for example, vinylsilane such as Vinyltrimethoxysilane and Vinyltriethoxysilane; acrylic acid silane such as 3-methyl acrylate acid propyl methyl dimethoxy silane, 3-methyl acrylate acid propyl trimethoxy silane, 3-methyl acrylate acid propyl methyl diethoxy silane, 3-methyl-acrylate acid propyl triethoxy silane, 3-acrylic acid propyl trimethoxy silane; and amino silane such as N-2(aminoethyl)3-aminopropylmethyl dimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, N-phenyl-3-aminopropyltrimethoxysilane, 3-amino-N-(1,3-dimethyl-butylidene)propyltriethoxysilane.

In one embodiment, the chemical structure of the silane coupling agent is:

H₂N-(CH₂)₃Si(OCₙH₂ₙ₊₁)₃ or CH₂=CH-R-Si(OCₙH₂ₙ₊₁)₃

wherein n is an integer of 1 or more, R is (C₁-C₁₂) alkylene.

Examples of the silane coupling agent-modified active substance include, but are not limited to, lithium nickel cobalt aluminum oxide (NCA), lithium nickel cobalt manganese oxide (LNCM) or an active substance of metal oxides, e.g., lithium cobalt oxide (LiCoO₂), lithium manganese oxide (LiMnO₂), lithium nickel oxide (LiNiO₂), lithium iron phosphate oxide (LiFePO₄), or lithium nickel cobalt manganese oxide (LiNi_{0.5}Co_{0.2}Mn_{0.3}O₂).

The maleimide additive contains the compound having the structure of maleimide. In one embodiment, the amount of the maleimide additive ranges from 0.1 wt% to 5 wt% based on the total weight of the solid content of the battery electrode paste composition.

In a particular embodiment, the compound having a structure of maleimide has a structure of poly maleimide. The amount of the maleimide additive ranges from 0.1 wt% to 1 wt% based on the total weight of the solid content of the battery electrode paste composition of the present application. In addition, the compound having a structure of polymaleimide has two or more structures of melaimide.

In another embodiment, the compound having the structure of maleimide has a structure of mono maleimide or is modified with a compound having a structure of the barbituric acid.

In another embodiment, the compound having the structure of maleimide is modified with a compound having a structure of the barbituric acid, or is indicated as modified maleimide, which is obtained by a reaction of the compound having a structure of the barbituric acid and the compound having the structure of maleimide. The amount of such maleimide additive ranges from 0.5 wt% to 5 wt% based on the total weight of the solid content of the battery paste composition of the present application.

In order to obtain the modified maleimide additive, in one specific embodyment, the molar ratio of the compound having the structure of maleimide and the compound having the structure of the barbituric acid ranges from 25:1 to 1:1.

The compound having the structure of the barbituric acid has a structure represented by the formula (I): 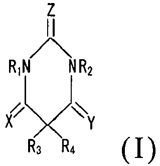 wherein X, Y and Z are all oxygen atoms or at least one of them is substituted by an oxygen atom, and R₁, R₂, R₃ and R₄ are independently selected from hydrogen or (C₁-C₅)alkyl.

In one embodiment, X, Y and Z are all oxygen atoms, R₃ and R₄ are both hydrogen. Further, R₁ as well as R₂ are independently selected from hydrogen or (C₁-C₅)alkyl, but R₁ and R₂ are not hydrogen at the same time

Yet in one embodiment, X, Y and Z are all oxygen atoms or at least one of them is replaced with a sulfur atom, and R₁, R₂, R₃ and R₄ are independently selected from hydrogen or (C₁-C₅)alkyl.

In addition, the compound as the maleimide additive or the compound having the structure of maleimide to react with the compound having the structure of the barbituric acid may have the structure of polymaleimide and/or mono maleimide

In one embodiment, the compound comprising the structure of maleimide has a structure represented by the formula (II): 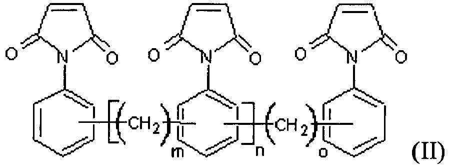 wherein m, n and o are independently an integer of 0 or more, and m, n as well as o are not 0 at the same time.

In another embodiment, m, n and o are independently an integer of 1 or more.

In another embodiment, the compound having the structure of maleimide has a structure represented by the formula (III): 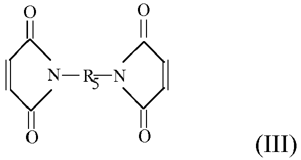 wherein R₅ is (C₁-C₁₂)alkylene,

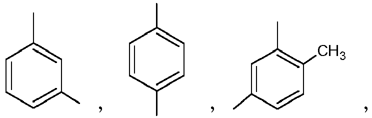

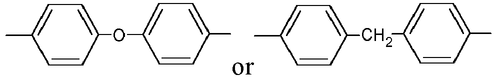

In one embodiment, the (C₁-C₁₂)alkylene may be -(CH₂)₂-, -(CH₂)₆-, -(CH₂)₈-, -(CH₂)₁₂- or -CH₂-C(CH₃)₂-CH₂-CH(CH₃)-(CH₂)₂-.

In one embodiment, the compound comprising the structure of maleimide is at least one selected from the group consisting of compounds having the structure of maleimide: Phenylmaleimide, N-(p-methylphenyl) maleimide, N-(o-methylphenyl) maleimide, N-(m-methylphenyl) maleimide, N-cyclohexyl maleimide, Maleimide, Maleimidophenol, Maleimidobenzocyclobutene, Phosphorus-containing maleimide, Phosphonate-containing maleimide, Siloxane-containing maleimide, N-(4-tetrahydropyranyl-oxyphenyl) maleimide and 2,6-Xylyl-maleimide.

In the modification reaction of the modified maleimide, propylene carbonate (PC) or N-methylpyrrolidone (NMP) may be used, for example, as a solvent. Moreover, a weight ratio of a total weight of the compound having the structure of the barbituric acid, a radical scavenger as well as the compound having the structure of maleimide and a weight of the solvent is from 3:97 to 40:60. The modification reaction may proceed in the temperature from 110°C to 130°C for 2 to 7 hours.

The modified maleimide having a hyperbranched (dendrimer-like) structure may form a stable complex compound with the electrode active substance such as metal oxides in the battery electrode paste composition to increase dispersibility and maintain stability of viscosity for long time.

In addition, the present application may use a cathode electrode active substance at least one selected from of the group consisting of Mesophase Carbon Mocro Beads (MCMB) and natural graphite powders as the electrode active substance in the paste composition.

The amount of the active substance is not specifically limited as long as an amount thereof is enough to provide desired capacity without influencing electrode coating process. In one embodiment, the amount of the active substance is from 20 wt% to 80 wt% based on the total weight of the composition.

Examples of the conductive additive of the composition include, but are not limited to, at least one of grain graphite KS4 (4 µm), grain graphite KS6 (6 µm), Vapor Grown Carbon Fiber (VGCF) and small particles of carbon black (SP). Typically, Vapor Grown Carbon Fiber (VGCF) is used.

Functional groups may be introduced into the conductive additive by surface treatment process, so that the surface of the additive has a functional group with a double bond which may react with maleimide. For example, a silane coupling agent or an oleic acid coupling agent is used to modify the conductive additive, so that the surface of the conductive additive have an amino group (-NH₂) or a vinyl group with a double bond (-CH=CH₂) to react with a modified maleimide dispersant. Typically, the solid content of the conductive additive is from 0.1 wt% to 5 wt% based on the total weight of the composition.

Examples of the adhesive of the battery electrode pasted composition include, but not limited to, polyvinylidene difluoride (PVDF), acrylic resin as well as styrene-butadiene rubber (SBR), and at least one adhesive may be used. The adhesive with the modified maleimide dispersant is mixed to be a network uniform structure to improve the coating properties of the paste. In one embodiment, the amount of the adhesive composition is from 0.1 wt% to 15 wt% based on the total weight of the composition. The battery electrode paste composition may further include other additives, for example, a surfactant, and a reaction initiator such as a peroxide or 2,2'-azobisisobutyronitrile (AIBN).

A silane coupling agent-modified active substance of the present disclosure may bind to chemical reaction bonds of maleimide and a barbutiric acid in formulation of the paste by an active chemical reactive group -NH₂ or -CH=CH₂ on terminals of the active substance during treatment of producing, coating and drying the paste. This reduces possibility of ionization of maleimide and the barbituric acid combining with the electrode adhesive, avoiding cracks of an electrode plate and improving rolling density in the end. The silane coupling agent-modified active substance, maleimide, the barbituric acid, conductive powders and the electrode adhesive are dispersed in a solvent of N-methyl pyrrolidone to form structurally homogenous paste coating on the anode aluminum metal collector plate as a component of an anode electrode paste of a lithium-ion battery or a lithium polymer battery. The lithium battery produced based on such process may be safer, and have lower impedance as well as higher capacity.

The following examples are for illustration of the present disclosure, and not to limit the scope of the claims of the present disclosure.

### EXAMPLES

### Synthesis Example 1: Preparation of lithium cobalt oxide modified with the silane coupling agent

A weight ratio of lithium cobalt oxide (LiCoO₂): 3-aminopropyl triethoxy silane (APTES): n-hexane for mixing is 87.00: 0.02: 12.98. The aforementioned mixture is treated in the temperature of 70°C for about 1 hour, then in the temperature raised to 105°C for another 1 hour, and finally in the temperature raised to 190°C for 1 more hour again to obtain an initial product of lithium cobalt oxide modified with the silane coupling agent. The initial product of lithium cobalt oxide modified with the silane coupling agent is washed with n-hexane for three times, and is then baked in an oven in 110°C for 2-3 hours to obtain a final purified product, which is lithium cobalt oxide modified with the silane coupling agent in powder.

### Synthesis Example 2: Preparation of lithium ternary oxide (LiNi_{0.5}sCo_{0.2}Mn_{0.3}O₂) modified with the silane coupling agent

A weight ratio of lithium ternary oxide (LiNi_{0.5}Co_{0.2}Mn_{0.3}O₂): 3-aminopropyl triethoxy silane (APTES): n-hexane for mixing is 87.00: 0.02: 12.98. The aforementioned mixture is treated in the temperature of 70°C for about 1 hour, then in the temperature raised to 105°C for another 1 hour, and finally in the temperature raised to 190°C for 1 more hour again to obtain an initial product of lithium ternary oxide modified with the silane coupling agent. The initial product of lithium ternary oxide modified with the silane coupling agent is washed with n-hexane for three times, and is then baked in an oven in 110°C for 2-3 hours to obtain a final purified product, which is lithium ternary oxide modified with the silane coupling agent in powder.

### Synthesis Example 3: Preparation of lithium nickel cobalt aluminum oxide modified with the silane coupling agent

A weight ratio of lithium nickel cobalt aluminum oxide (NCA): 3-aminopropyl triethoxy silane (APTES): n-hexane for mixing is 87.00: 0.02: 12.98. The aforementioned mixture is treated in the temperature of 70°C for about 1 hour, then in the temperature raised to 105°C for another 1 hour, and finally in the temperature raised to 190°C for 1 more hour again to obtain an initial product of lithium nickel cobalt aluminum oxide modified with the silane coupling agent. The initial product of lithium nickel cobalt aluminum oxide modified with the silane coupling agent is washed with n-hexane for three times, and is then baked in an oven in 110°C for 2-3 hours to obtain a final purified product, which is lithium nickel cobalt aluminum oxide modified with the silane coupling agent in powder.

### Synthesis Example 4: Preparation of a polymaleimide dispersant

A weight ratio of bismaleimide: N-methyl-pyrrolidone (NMP) solvent for mixing is 3: 97. A reaction of the aforementioned mixture proceeds to obtain polymaleimide, which is used as an additive for the formulation of the lithium battery electrode material composition, in N-methyl-pyrrolidone as a solvent in 130°C for about 24 hours. The bismaleimide is a compound represented by the following formula (IV):

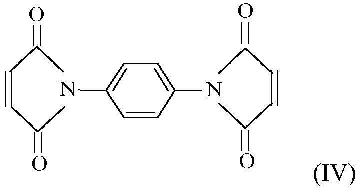

### Synthesis Example 5: Preparation of a modified maleimide dispersants

The bismaleimide: barbituric acid (BTA) (by a molar ratio of 2: 1) is added into N-methyl pyrrolidone, wherein a weight ratio of bismaleimide + barbituric acid: N-methyl-pyrrolidone is 5: 95. A reaction of the aforementioned mixture proceeds to obtain the modified maleimide, which is used as an additive in the formulation of the lithium battery electrode material composition, in N-methyl-pyrrolidone as a solvent in 130°C for about 24 hours. The bismaleimide is a compound represented by the following formula (IV):

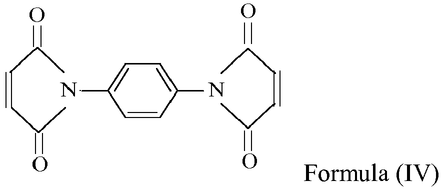

### Example 1: Preparation of a lithium-ion battery of lithium cobalt oxide modified with the silane coupling agent

Firstly, 671.2 g of lithium cobalt oxide modified with the silane coupling agent of Synthesis Example 1, 17.4 g of a co-conductive agent (Super P), 13.9 g of polyvinylidene difluoride (PVDF) and 297.5 g of N- methylpyrrolidone are placed in Planetary Mixer to obtain standard lithium ion battery cathode electrode paste, and meanwhile, 2.1 g of Synthesis Example 4 is added into this cathode electrode paste as the battery additive.

Then, based on a standard preparation of the lithium-ion battery cathode electrode plate, the pasted is coated on surface of an aluminum foil to obtain an anode electrode plate.

In addition, based on a standard preparation of the lithium-ion battery cathode electrode plate, cathode electrode paste and a cathode electrode plate are prepared. That is, 930 g of Mesocarbon Microbeads (MCMB 2528), 20 g of conductive graphite (KS4), 60 g of polyvinylidene difluoride (PVDF), 45g of oxalic acid and 750 g of N-methylpyrrolidone are placed in Planetary Mixer to obtain cathode electrode plate paste, followed by coating the paste on surface of a copper foil to obtain a negative electrode plate.

Subsequently, the positive electrode plate and the negative electrode plate are assembled to give a standard battery core (Jelly Roll, 503759C) with a size of 5 mm (height) x 37 mm (width) x 59 mm (length) where 4.2 g of liquid standard electrolyte (PC / EC (ethylene carbonate) / DEC (diethyl carbonate) = 2/3/5 (volume ratio), adding 1.1 M of LiPF6 and 2.0 wt% of vinylene carbonate (VC)) is poured into. Then, after package and formation, the lithium-ion battery of Example 1 is thus obtained.

### Example 2: Preparation of a lithium-ion battery containing lithium cobalt oxide modified with the silane coupling agent

Based on the method of Example 1, a lithium-ion battery is prepared, but the battery additive is replaced by 7.0g of Synthesis Example 5 added into this anode electrode paste.

### Comparative Example 1: Preparation of a lithium-ion battery containing lithium cobalt oxide without modification

Based on the method of Example 1, a lithium-ion battery is prepared, but the battery additive is not added; moreover, lithium cobalt oxide modified with the silane coupling agent is replaced by lithium cobalt oxide without modification.

### Comparative Example 2: Preparation of a lithium-ion battery containing lithium cobalt oxide without modification

Based on the method of Example 1, a lithium-ion battery is prepared, but lithium cobalt oxide modified with the silane coupling agent is replaced by lithium cobalt oxide without modification.

### Comparative Example 3: Preparation of a lithium-ion battery containing lithium cobalt oxide without modification

Based on the method of Example 2, a lithium-ion battery is prepared, but lithium cobalt oxide modified with the silane coupling agent is replaced by lithium cobalt oxide without modification.

### Example 1-1: Preparation of a lithium-ion battery containing lithium ternary oxide modified with the silane coupling agent

Based on the method of Example 1, a lithium-ion battery is prepared, but lithium cobalt oxide modified with the silane coupling agent of Synthesis Example 1 is replaced by lithium ternary oxide modified with the silane coupling agent of Synthesis Example 2.

### Example 2-1: Preparation of a lithium-ion battery containing lithium ternary oxide modified with the silane coupling agent

Based on the method of Example 1-1, a lithium-ion battery is prepared, but the battery additive is replaced by 7.0g of Synthesis Example 5 added into this anode electrode paste.

### Comparative Example 1-1: Preparation of a lithium-ion battery containing lithium ternary oxide without modification

Based on the method of Example 1-1, a lithium-ion battery is prepared, but the battery additive is not added; moreover, lithium ternary oxide modified with the silane coupling agent is replaced by lithium ternary oxide without modification.

### Comparative Example 2-1: Preparation of a lithium-ion battery containing lithium ternary oxide without modification

Based on the method of Example 1-1, a lithium-ion battery is prepared, but lithium ternary oxide modified with the silane coupling agent is replaced by lithium ternary oxide without modification.

### Comparative Example 3-1: Preparation of a lithium-ion battery containing lithium ternary oxide without modification

Based on the method of Example 2-1, a lithium-ion battery is prepared, but lithium ternary oxide modified with the silane coupling agent is replaced by lithium ternary oxide without modification.

### Example 1-2: Preparation of a lithium-ion battery containing lithium nickel cobalt aluminum oxide modified with the silane coupling agent

Based on the method of Example 1, a lithium-ion battery is prepared, but lithium cobalt oxide modified with the silane coupling agent of Synthesis Example 1 is replaced by lithium nickel cobalt aluminum oxide modified with the silane coupling agent of Synthesis Example 3.

### Example 2-2: Preparation of a lithium-ion battery containing lithium nickel cobalt aluminum oxide modified with the silane coupling agent

Based on the method of Example 1-2, a lithium-ion battery is prepared, but the battery additive is replaced by 7.0g of Synthesis Example 5 added into this anode electrode paste.

### Comparative Example 1-2: Preparation of a lithium-ion battery containing lithium nickel cobalt aluminum oxide without modification

Based on the method of Example 1-2, a lithium-ion battery is prepared, but the battery additive is not added; moreover, lithium nickel cobalt aluminum oxide modified with the silane coupling agent is replaced by lithium nickel cobalt aluminum oxide without modification.

### Comparative Example 2-2: Preparation of a lithium-ion battery containing lithium nickel cobalt aluminum oxide without modification

Based on the method of Example 1-2, a lithium-ion battery is prepared, but lithium nickel cobalt aluminum oxide modified with the silane coupling agent is replaced by lithium nickel cobalt aluminum oxide without modification.

### Comparative Example 3-2: Preparation of a lithium-ion battery containing lithium nickel cobalt aluminum oxide without modification

Based on the method of Example 2-2, a lithium-ion battery is prepared, but lithium nickel cobalt aluminum oxide modified with the silane coupling agent is replaced by lithium nickel cobalt aluminum oxide without modification.

### Test Example 1: Rolling test of final density of the anode electrode plate

The aforementioned anode electrode plate of aluminum substrate is cut by a standard jig to obtain a standard circular area of 50 cm², wherein the aluminum foil has a specific thickness (during the rolling process, thickness, diameter and quality being treated as fixed). Further, a pure solid of aluminum foil with specific quantity, to which the anode electrode composition is coated, may be calculated for an initial/final density before/after the rolling respectively based on M = D x V (M: quality, D: density and V: volume). The rolling machine for the manufacture of lithium batteries is the commonly used one, and in the present disclosure is Japan Ono rolling machine (maximum output power of 150 tons, the general operating range is 10-30 tons), by which values of rolling density of examples and comparative examples in the present application are thus obtained as shown Tables 1 to 3 as follows.

**Table 1**

| | Example | | Comparative Example | | |
|---|---|---|---|---|---|
| | 1 | 2 | 1 | 2 | 3 |
| Rolling density (g/cm³) | 4.0 | 4.0 | 4.0 | 3.7 | 3.6 |

**Table 2**

| | Example | | Comparative Example | | |
|---|---|---|---|---|---|
| | 1-1 | 2-1 | 1-1 | 2-1 | 3-1 |
| Rolling density (g/cm³) | 3.4 ^{a} | 3.4 ^{a} | 3.4 ^{a} | 3.4^{b} | 3.4 ^{b} |

| | | | | | |
|---|---|---|---|---|---|
| ^{a} an electrode plate remaining pliable as before, and folding twice not causing cracks ^{b} an electrode plate less pliable than before, and folding twice causing cracks | | | | | |

**Table 3**

| | Example | | Comparative Example | | |
|---|---|---|---|---|---|
| | 1-2 | 2-2 | 1-2 | 2-2 | 3-2 |
| Rolling density (g/cm³) | 2.9 ^{a} | 2.9 ^{a} | 2.9 ^{a} | 2.9^{b} | 2.9^{b} |

| | | | | | |
|---|---|---|---|---|---|
| ^{a} an electrode plate remaining pliable as before, and folding twice not causing cracks ^{b} an electrode plate less pliable than before, and folding twice causing cracks | | | | | |

### Test Example 2: Test of performance of the lithium-ion battery

In a constant current charge and discharge procedure at 1C rate, a test of performance of the lithium-ion battery is conducted. During the test, the first discharge capacity, impedance and a residual amount of discharge (after the final charge) after 500 cycles of charge and discharge (cycle, 1 hour for discharge and another 1 hour for charge) in room temperature are recorded, and so are a residual amount of discharge after 500 cycles of charge discharge in 55 °C as shown in Tables 4 to 6.

**Table 4**

| | Performance of battery products | | | |
|---|---|---|---|---|
| | The first discharge capacity (mAh) | Impedance (mΩ) | Residual amount of discharge after 500 cycles at 1C / 1C rate (in room temperature) (%) | Residual amount of discharge after 500 cycles at 1C / 1C rate (in 55°C) (%) |
| Example 1 | 1347 | 30 | 92 | 85 |
| Example 2 | 1345 | 31 | 90 | 84 |
| Comparative Example 1 | 1350 | 30 | 82 | 70 |
| Comparative Example 2 | 1335 | 33 | 86 | 82 |
| Comparative Example 3 | 1329 | 35 | 84 | 80 |

**Table 5**

| | Performance of battery products | | | |
|---|---|---|---|---|
| | The first discharge capacity (mAh) | Impedance (mΩ) | Residual amount of discharge after 500 cycles at 1C / 1C rate (in room temperature) (%) | Residual amount of discharge after 500 cycles at 1C / 1C rate (in 55°C) (%) |
| Example 1-1 | 1998 | 35 | 93 | 86 |
| Example 2-1 | 1992 | 36 | 90 | 84 |
| Comparative Example 1-1 | 2000 | 35 | 80 | 68 |
| Comparative Example 2-1 | 1975 | 39 | 87 | 82 |
| Comparative Example 3-1 | 1949 | 41 | 84 | 79 |

**Table 6**

| | Performance of battery products | | | |
|---|---|---|---|---|
| | The first discharge capacity (mAh) | Impedance (mΩ) | Residual amount of discharge after 500 cycles at 1C / 1C rate (in room temperature) (%) | Residual amount of discharge after 500 cycles at 1C / 1C rate (in 55°C) (%) |
| Example 1-1 | 4994 | 41 | 94 | 87 |
| Example 2-1 | 4998 | 43 | 91 | 85 |
| Comparative Example 1-1 | 5000 | 41 | 81 | 70 |
| Comparative Example 2-2 | 4936 | 45 | 88 | 83 |
| Comparative Example 3-1 | 4870 | 48 | 85 | 81 |

### Test Example 3: Test of the lithium-ion battery safety

A test of the battery safety is conducted with a needle having a diameter of 2.5mm (speed of the needle at 1 mm/S), and resulting values are recorded as shown in Tables 7 to 9 as follows.

**Table 7**

| | Burst into flames | the temperature of the battery center when piercing with the needle (°C) |
|---|---|---|
| Example 2 | No | 125 |
| Comparative Example 1 | Yes | 715 |
| Comparative Example 2 | Yes | 701 |
| Comparative Example 3 | No | 132 |

**Table 8**

| | Burst into flames | the temperature of the battery center when piercing with the needle (°C) |
|---|---|---|
| Example 2-1 | No | 129 |
| Comparative Example 1-1 | Yes | 680 |
| Comparative Example 2-1 | Yes | 645 |
| Comparative Example 3-1 | No | 131 |

**Table 9**

| | Burst into flames | the temperature of the battery center when piercing with the needle (°C) |
|---|---|---|
| Example 2-2 | No | 132 |
| Comparative Example 1-2 | Yes | 705 |
| Comparative Example 2-2 | Yes | 698 |
| Comparative Example 3-2 | No | 135 |

According to data shown in Tables 4 to 9, application of the active substance to the lithium-ion battery provides good battery safety, high capacity, and excellent cycle life in the ordinary or high temperature.

## Claims

1. A battery electrode paste composition, comprising:
a silane coupling agent-modified active substance comprising lithium and at least one non-lithium metal, wherein the silane coupling agent-modified active substance is obtained by bonding a silane coupling agent to an active substance;
a conductive additive;
an adhesive; and
a maleimide additive comprising a compound having a maleimide structure.

2. The battery electrode paste composition of claim 1, wherein the silane coupling agent has an -NH₂ reactive group or a -CH=CH₂ reactive group.

3. The battery electrode paste composition of any of the preceding claims, wherein the silane coupling agent has a chemical structure represented by H₂N-(CH₂)₃Si(OCₙH₂ₙ₊₁)₃ or CH₂=CH-R-Si(OCₙH₂ₙ₊₁)₃, and wherein n is an integer of 1 or higher than 1, and R is (C₁-C₁₂)alkylene.

4. The battery electrode paste composition of any of the preceding claims, wherein the silane coupling agent is 3-aminopropyltriethoxysilane.

5. The battery electrode paste composition of any of the preceding claims, wherein the active substance is a metal oxide selected from the group consisting of lithium nickel cobalt aluminum oxide (NCA), lithium nickel cobalt manganese oxide (LNCM), lithium cobalt oxide (LiCoO₂), lithium manganese oxide (LiMnO₂), lithium nickel oxide (LiNiO₂), lithium iron phosphate (LiFePO₄) and lithium nickel cobalt manganese oxide (LiNi_{0.5}Co_{0.2}Mn_{0.3}O₂).

6. The battery electrode paste composition of any of the preceding claims, wherein the compound having a maleimide structure has a polymaleimide structure.

7. The battery electrode paste composition of any of the preceding claims, wherein the compound having a maleimide structure is modified with a compound having a barbituric acid structure.

8. The battery electrode paste composition of claim 7, wherein the compound having a barbituric acid structure has a structure represented by formula (I): 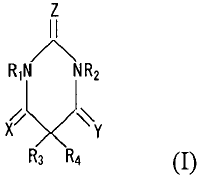 wherein each of X, Y and Z is an oxygen atom, or at least one of X, Y and Z is replaced with a sulfur atom; and R₁, R₂, R₃ and R₄ are independently selected from the group consisting of hydrogen and (C₁-C₅)alkyl.

9. The battery electrode paste composition of claim 8, wherein each of X, Y and Z is an oxygen atom, each of R₃ and R₄ is hydrogen, and R₁ and R₂ are independently selected from the group consisting of hydrogen and (C₁-C₅)alkyl, provided that R₁ and R₂ are not hydrogen at the same time.

10. The battery electrode paste composition of any of the preceding claims, wherein the compound having a maleimide structure has a structure represented by formula (II): 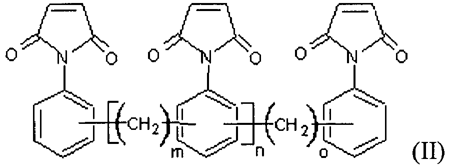 wherein m, n and o are independently an integer of 0 or more, provided that m, n and o are not 0 at the same time.

11. The battery electrode paste composition of any of the preceding claims, wherein the compound having a maleimide structure has a structure represented by formula (III): 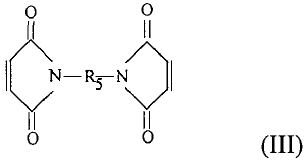 wherein R₅ is (C₁-C₁₂)alkylene,

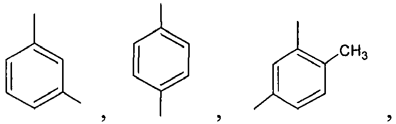

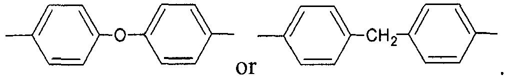

12. The battery electrode paste composition of any of the preceding claims, wherein the compound having a maleimide structure is at least one selected from the group consisting of phenylmaleimide, N-(p-methylphenyl) maleimide, N-(o-methylphenyl) maleimide, N-(m-methylphenyl) maleimide, N-cyclohexyl maleimide, maleimide, maleimidophenol, maleimidobenzocyclobutene, phosphorus-containing maleimide, phosphonate-containing maleimide, siloxane-containing maleimide, N-(4-tetrahydropyranyl-oxyphenyl) maleimide and 2,6-xylyl-maleimide.

13. The battery electrode paste composition of any of the preceding claims, wherein an amount of the maleimide additive ranges from 0.1 wt% to 5 wt%, based on a total weight of the solid content of the battery electrode paste composition.

14. The battery electrode paste composition of any of the preceding claims, wherein an amount of the adhesive ranges from 0.1 wt% to 15 wt%, based on a total weight of the battery electrode paste composition.

15. The battery electrode paste composition of any of the preceding claims, wherein an amount of the conductive additive ranges from 0.1 wt% to 5 wt%, based on a total weight of the solid content of the battery electrode paste composition.

## Patentansprüche

1. Batterieelektrodenpasten-Zusammensetzung, aufweisend:
eine mit einem Silan-Kopplungsmittel modifizierte Aktivsubstanz aufweisend Lithium und zumindest ein nicht-Lithium Metall, wobei die Silan-Kopplungsmittel modifizierte Aktivsubstanz durch Binden eines Silan-Kopplungsmittels an eine Aktivsubstanz erhalten wird;
ein leitfähiges Additiv;
ein Haftmittel; und
ein Maleimid-Additiv aufweisend eine Verbindung mit einer Maleimid-Struktur.

2. Batterieelektrodenpasten-Zusammensetzung nach Anspruch 1, wobei das Silan-Kopplungsmittel eine -NH₂-Reaktivgruppe oder eine -CH=CH₂-Reaktivgruppe hat.

3. Batterieelektrodenpasten-Zusammensetzung nach einem der vorstehenden Ansprüche, wobei das Silan-Kopplungsmittel eine chemische Struktur hat, die durch H₂N-(CH₂)₃Si(OCₙH₂ₙ₊₁)₃ oder CH₂=CH-R-Si(OCₙH₂ₙ₊₁)₃ dargestellt wird, und wobei n eine Ganzzahl von größer gleich 1 ist, und R (C₁-C₁₂)Alkylen ist.

4. Batterieelektrodenpasten-Zusammensetzung nach einem der vorstehenden Ansprüche, wobei das Silan-Kopplungsmittel 3-Aminopropyltriethoxysilan ist.

5. Batterieelektrodenpasten-Zusammensetzung nach einem der vorstehenden Ansprüche, wobei die Aktivsubstanz ein Metalloxid ausgewählt aus der Gruppe bestehend aus Lithium-Nickel-Cobalt-Aluminiumoxid (NCA), Lithium-Nickel-Cobalt-Manganoxid (LNCM), Lithium-Cobaltoxid (LiCo02), Lithium-Manganoxid (LiMn02), Lithium-Nickeloxid (LiNi02), Lithiumeisenphosphat (LiFePO₄) und Lithium-Nickel-Cobalt-Manganoxid (LiNi_{0.5}Co_{0.2}Mn_{0.3}O₂) ist.

6. Batterieelektrodenpasten-Zusammensetzung nach einem der vorstehenden Ansprüche, wobei die Verbindung mit einer Maleimid-Struktur eine Polymaleimid-Struktur hat.

7. Batterieelektrodenpasten-Zusammensetzung nach einem der vorstehenden Ansprüche, wobei die Verbindung mit einer Maleimidstruktur mit einer Verbindung mit einer Barbitursäurestruktur modifiziert ist.

8. Batterieelektrodenpasten-Zusammensetzung nach Anspruch 7, wobei die Verbindung mit einer Barbitursäurestruktur eine Struktur hat, die durch Formel (I) dargestellt wird: 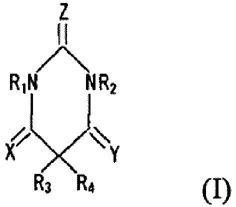 wobei X, Y und Z jeweils ein Sauerstoffatom ist, oder zumindest eines von X, Y und Z durch ein Schwefelatom ersetzt ist; und R₁, R₂, R₃, und R₄ unabhängig voneinander ausgewählt sind aus der Gruppe bestehend aus Wasserstoff und (C₁-C₅)-Alkyl.

9. Batterieelektrodenpasten-Zusammensetzung nach Anspruch 8, wobei X, Y und Z jeweils ein Sauerstoffatom ist, R₃ und R₄ jeweils Wasserstoff ist, und R₁ und R₂ unabhängig ausgewählt sind aus der Gruppe bestehend auf Wasserstoff und (C₁-C₅)-Alkyl, vorausgesetzt, dass R₁ und R₂ nicht gleichzeitig Wasserstoff sind.

10. Batterieelektrodenpasten-Zusammensetzung nach einem der vorstehenden Ansprüche, wobei die Verbindung mit einer Maleimid-Struktur eine Struktur hat, die durch Formel (II) dargestellt wird: 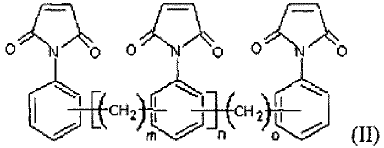 wobei m, n und o unabhängig eine Ganzzahl von größer gleich 0 sind, vorausgesetzt, dass m, n und o nicht gleichzeitig 0 sind.

11. Batterieelektrodenpasten-Zusammensetzung nach einem der vorstehenden Ansprüche, wobei die Verbindung mit einer Maleimidstruktur eine Struktur hat, die durch Formel (III) dargestellt wird: 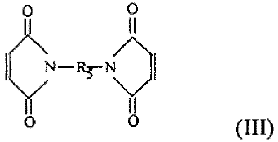 wobei R₅ (C₁-C₁₂)Alkylen, 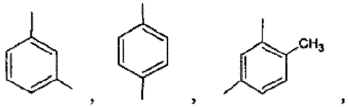 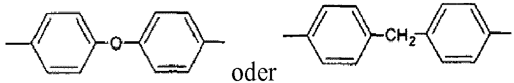 ist.

12. Batterieelektrodenpasten-Zusammensetzung nach einem der vorstehenden Ansprüche, wobei die Verbindung mit einer Maleimidstruktur zumindest eine ist ausgewählt aus der Gruppe bestehend aus Phenylmaleimid, N-(p-Methylphenyl) Maleimid, N-(o-methylphenyl) Maleimid, N-(m-methylphenyl) Maleimid, N-cyclohexyl Maleimid, Maleimid, Maleimidophenol, Maleimidobenzocyclobuten, Phosphor-haltiges Maleimid, Phosphonat-haltiges Maleimid, Siloxan-haltiges Maleimid, N-(4-tetrahydropyranyl-oxyphenyl) Maleimid und 2,6-xylyl- Maleimid.

13. Batterieelektrodenpasten-Zusammensetzung nach einem der vorstehenden Ansprüche, wobei eine Menge des Maleimid-Additivs basierend auf einem Gesamtgewicht des Festgehalts der Batterieelektrodenpasten-Zusammensetzung zwischen 0,1 Gewichtsprozent und 5 Gewichtsprozent liegt.

14. Batterieelektrodenpasten-Zusammensetzung nach einem der vorstehenden Ansprüche, wobei eine Menge des Haftmittels basierend auf einem Gesamtgewicht der Batterieelektrodenpasten-Zusammensetzung zwischen 0,1 Gewichtsprozent und 15 Gewichtsprozent liegt.

15. Batterieelektrodenpasten-Zusammensetzung nach einem der vorstehenden Ansprüche, wobei eine Menge des leitfähigen Additivs basierend auf einem Gesamtgewicht des Festgehalts der Batterieelektrodenpasten-Zusammensetzung zwischen 0,1 Gewichtsprozent und 5 Gewichtsprozent liegt.

## Revendications

1. Composition de pâte pour électrode de batterie, comprenant :
une substance active modifiée par un agent de couplage au silane, comprenant du lithium et au moins un métal n'étant pas du lithium, dans laquelle la substance active modifiée par un agent de couplage au silane est obtenue en liant un agent de couplage au silane à une substance active ;
un additif conducteur ;
un adhésif, et
un additif maleimide comprenant un composé présentant une structure maleimide.

2. Composition de pâte pour électrode de batterie selon la revendication 1, dans laquelle l'agent de couplage au silane présente un groupe de réaction -NH₂ ou un groupe de réaction - CH=CH₂.

3. Composition de pâte pour électrode de batterie selon l'une quelconque des revendications précédentes, dans laquelle l'agent de couplage au silane présente une structure chimique représentée par H₂N-(CH₂)₃Si(OCₙH₂ₙ₊₁)₃ ou CH₂₌CH-R-Si(OCₙH₂ₙ₊₁)₃, et dans laquelle n est un entier supérieur ou égal à 1, et R est un alkylène en (C₁-C₁₂).

4. Composition de pâte pour électrode de batterie selon l'une quelconque des revendications précédentes, dans laquelle l'agent de couplage au silane est 3-aminopropyltriéthoxysilane.

5. Composition de pâte pour électrode de batterie selon l'une quelconque des revendications précédentes, dans laquelle la substance active est un oxyde de métal sélectionné parmi le groupe consistant en un oxyde d'aluminium, de cobalt, de nickel et de lithium (NCA) ; un oxyde de manganèse, de cobalt, de nickel et de lithium (LNCM) ; un oxyde de cobalt et de lithium (LiCo02) ; un oxyde de manganèse et de lithium (LiMnO₂) ; un oxyde de nickel et de lithium (LiNi02) ; un phosphate de fer et de lithium (LiFePO₄), et un oxyde de manganèse, de nickel, de cobalt et de lithium (LiNi_{0,5}Co_{0,2}Nn_{0,3}O₂).

6. Composition de pâte pour électrode de batterie selon l'une quelconque des revendications précédentes, dans laquelle le composé présentant une structure maleimide présente une structure polymaleimide.

7. Composition de pâte pour électrode de batterie selon l'une quelconque des revendications précédentes, dans laquelle le composé présentant une structure maleimide est modifié avec un composé présentant une structure acide barbiturique.

8. Composition de pâte pour électrode de batterie selon la revendication 7, dans laquelle le composé présentant une structure acide barbiturique présente une structure représentée par la formule (I) : 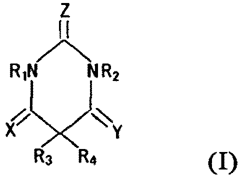 où chacun de X, Y et Z est un atome d'oxygène, ou au moins un de X, Y et Z est remplacé par un atome de soufre, et R₁, R₂, R₃ et R₄ sont sélectionnés indépendamment parmi le groupe consistant en de l'hydrogène et un alkyle en (C₁-C₅).

9. Composition de pâte pour électrode de batterie selon la revendication 8, dans laquelle chacun de X, Y et Z est un atome d'oxygène ; chacun de R₃ et R₄ est hydrogène ; chacun de R₁ et R₂ sont sélectionnés indépendamment parmi le groupe consistant en l'hydrogène et un alkyle en (C₁-C₅), à condition que R₁ et R₂ ne soient pas en même temps hydrogène.

10. Composition de pâte pour électrode de batterie selon l'une quelconque des revendications précédentes, dans laquelle le composé présentant une structure maleimide présente une structure représentée par la formule (II) : 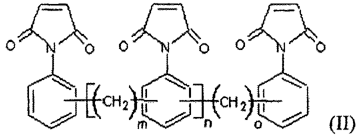 où m, n et o sont indépendamment un entier supérieur ou égal à 0, à condition que m, n et o ne soient pas égaux à 0 en même temps.

11. Composition de pâte pour électrode de batterie selon l'une quelconque des revendications précédentes, dans laquelle le composé présentant une structure maleimide présente une structure représentée par la formule (III) : 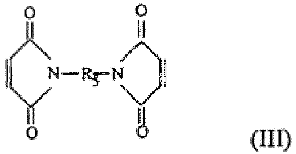 où R₅ est alkylène en (C₁-C₁₂), 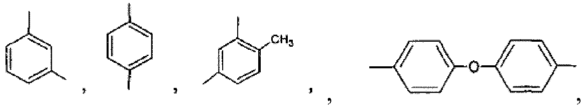 ou

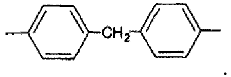

12. Composition de pâte pour électrode de batterie selon l'une quelconque des revendications précédentes, dans laquelle le composé présentant une structure maleimide est au moins un composé sélectionné parmi le groupe consistant en phénylmaleimide, N-(p-méthylphényl)maleimide, N-(o-méthylphényl)maleimide, N-(m-méthylphényl)maleimide, N-cyclohexylmaleimide, maleimide, maleimidophénol, maleimidobenzocyclobutène, maleimide contenant du phosphore, maleimide contenant un phosphonate, maleimide contenant un siloxane, N-(4-tétrahydropyranyl-oxyphényl)maleimide, et 2,6-xylyl-maleimide.

13. Composition de pâte pour électrode de batterie selon l'une quelconque des revendications précédentes, dans laquelle une quantité de l'additif maleimide s'étend de 0,1 % en poids à 5 % en poids, sur la base d'un poids total de la teneur solide de la composition de pâte pour électrode de batterie.

14. Composition de pâte pour électrode de batterie selon l'une quelconque des revendications précédentes, dans laquelle une quantité de l'adhésif s'étend de 0,1 % en poids à 15 % en poids, sur la base d'un poids total de la composition de pâte pour électrode de batterie.

15. Composition de pâte pour électrode de batterie selon l'une quelconque des revendications précédentes, dans laquelle une quantité de l'additif conducteur s'étend de 0,1 % en poids à 5 % en poids, sur la base d'un poids total de la teneur solide de la composition de pâte pour électrode de batterie.
